# EUROPEAN PATENT SPECIFICATION

(11) **EP 4 310 463 B1**
(45) Date of publication and mention of the grant of the patent: **11.12.2024**
(21) Application number: 22207281.1
(22) Date of filing: 14.11.2022
(51) Int. Cl.: G01F 23/00, G01F 23/80, G06F 30/23, G01F 1/00, G06F 113/08

(54) **METHOD AND APPARATUS FOR PREDICTING THE WATER LEVEL OF AN OUTLET SECTION, AND ELECTRONIC DEVICE**
VERFAHREN UND VORRICHTUNG ZUR VORHERSAGE DES WASSERSTANDS EINES AUSLASSABSCHNITTS UND ELEKTRONISCHE VORRICHTUNG
PROCÉDÉ ET APPAREIL DE PRÉDICTION DE NIVEAU D'EAU D'UNE SECTION DE SORTIE, ET DISPOSITIF ÉLECTRONIQUE

(30) Priority: 20.07.2022 CN 202210850498
(43) Date of publication of application: 24.01.2024
(73) Proprietor: China Three Gorges Co., Ltd., Wuhan Hubei 430010 (CN); China Three Gorges University, Yichang City, Hubei 443002 (CN)
(72) Inventor: JIANG, Dingguo, Wuhan, 430010 (CN); LIU, Wei, Wuhan, 430010 (CN); DAI, Huichao, Wuhan, 430010 (CN); ZHAI, Yanwei, Wuhan, 430010 (CN); ZOU, Peng, Wuhan, 430010 (CN); QUAN, Xiufeng, Wuhan, 430010 (CN)
(74) Representative: Groth & Co. KB

(56) References cited:
- CN-A- 110 543 731
- SHANG YIZI ET AL: "A method of direct, real-time forecasting of downstream water levels via hydropower station reregulation: A case study from Gezhouba Hydropower Plant, China", JOURNAL OF HYDROLOGY, vol. 573, 1 June 2019 (2019-06-01), AMSTERDAM, NL, pages 895 - 907, XP093055118, ISSN: 0022-1694, DOI: 10.1016/j.jhydrol.2019.04.017
- FENG WENWEN ET AL: "Study on water level prediction method of Shaping Hydropower Station based on BP neural network", 2021 7TH INTERNATIONAL CONFERENCE ON HYDRAULIC AND CIVIL ENGINEERING & SMART WATER CONSERVANCY AND INTELLIGENT DISASTER REDUCTION FORUM (ICHCE & SWIDR), IEEE, 6 November 2021 (2021-11-06), pages 1713 - 1716, XP034062516, DOI: 10.1109/ICHCESWIDR54323.2021.9656344

## Description

### TECHNICAL FIELD

The disclosure relates to the technical field of hydraulic engineering, and specifically, to a method and apparatus for predicting a water level of an outlet section, and an electronic device.

### BACKGROUND

Water level and water depth data are important indicators to reflect changes in water and water flow, such that the water level and water depth data are the most basic observation elements in hydrometric measurement. The water level and water depth observation data may be directly applied to the planning, design and construction of projects such as embankments, reservoirs, power stations, weir gates, irrigation, waterlogging drainage, waterways, bridges, and the like.

A traditional water-flow monitoring method is to acquire the flow rate and water level data of two sections by means of measurement. Then, a statistical analysis method is used to establish a one-to-one mapping relationship between the flow rate and water level, so as to describe the changes in the flow rate and water level between the sections. However, for example, in scenes such as the reservoirs, the water flow is non-constant, resulting in an inaccurate mapping relationship between the water flow rate and water level. As a result, calculating the water level of the outlet section on the basis of the mapping relationship between the water level and the flow rate leads to a relatively-large water level error obtained by calculation. Document by Shang Yizi ET AL, "A method of direct, real-time forecasting of downstream water levels via hydropower station reregulation: A case study from Gezhouba Hydropower Plant, China", Journal of Hydrology, Vol. 573, 1 June 2019, pages 895-907, XP093055118, AMSTERDAM, NLISSN: 0022-1694, DOI: 10.1016/j.jhydrol.2019.04.017, discloses a back propagation (BP) neural network-based forecasting model to forecast the downstream water level of a hydropower station according to monitoring data. Document by FENG WENWEN ET AL, "Study on water level prediction method of Shaping Hydropower Station based on BP neural network", 2021 7TH INTERNATIONAL CONFERENCE ON HYDRAULI AND CIVIL ENGINEERING & SMART WATER CONSERVANCY AND INTELLIGENT DISASTER REDUCTION FORUM (ICHCE & SWIDR), IEEE, 6 November 2021, pages 1713-1716, XP034062516, DOI: 10.1109/ICHCESWIDR54323.2021.9656344, discloses a method of reservoir water level prediction for hydropower stations based on BP neural network. Document CN110543731B (YELLOW RIVER ENGINEERIN CONSULTING CO LTD), 5 March 2021, discloses a water and sand separate dispatching simulation method and system for a high-sand-content river reservoir.

### SUMMARY

In view of this, an embodiment of the disclosure provides a method for predicting a water level of an outlet section, which is intended to solve the problem in the prior art that calculating the water level of the outlet section on the basis of the mapping relationship between the water level and the flow rate leads to a relatively-large water level error obtained by calculation.

According to a first aspect, an embodiment of the disclosure provides a method for predicting a water level of an outlet section, including:
acquiring an inlet flow rate corresponding to an inlet section within a first time period and an outlet flow rate of an outlet section within a second time period, wherein the first time period and the second time period have the same time duration, and the time difference between the first time period and the second time period is the time for water flowing from the inlet section to the outlet section;
on the basis of a difference relationship between the inlet flow rate and the outlet flow rate, calculating a change value of a reservoir capacity between the inlet section and the outlet section;
on the basis of a relationship among the change value of the reservoir capacity, the inlet flow rate and an initial water level in the second time period corresponding to the outlet section, calculating a first reservoir capacity of continuous sections between the inlet section and the outlet section within the second time period; and
inputting the first reservoir capacity and the inlet flow rate into a water level calculation model, and outputting a target outlet water level of the outlet section in the second time period, wherein the water level calculation model is generated by fitting on the basis of a relationship among the inlet flow rate, the outlet water level and the reservoir capacity.

In the method for predicting a water level of an outlet section provided in the embodiments of the disclosure, the inlet flow rate corresponding to the inlet section within the first time period and the outlet flow rate of the outlet section within the second time period are acquired. Then, on the basis of the difference relationship between the inlet flow rate and the outlet flow rate, the change value of the reservoir capacity between the inlet section and the outlet section is calculated, such that the accuracy of the change value of the reservoir capacity obtained by calculation can be guaranteed. On the basis of the relationship among the change value of the reservoir capacity, the inlet flow rate and the initial water level in the second time period corresponding to the outlet section, the first reservoir capacity of continuous sections between the inlet section and the outlet section within the second time period is calculated. In this way, the first reservoir capacity, obtained by calculation, of the continuous sections between the inlet section and the outlet section within the second time period can be guaranteed. Then, the first reservoir capacity and the inlet flow rate are inputted into the water level calculation model, and the target outlet water level of the outlet section in the second time period is outputted. In this way, the accuracy of the target outlet water level obtained by calculation can be guaranteed. The above method does not calculate the target outlet water level corresponding to the outlet section on the basis of a mapping relationship between the water level and the flow rate, but calculates the change value of the reservoir capacity between the inlet section and the outlet section by means of the difference relationship between the inlet flow rate and the outlet flow rate, then calculates the first reservoir capacity on the basis of the change value of the reservoir capacity, and finally obtains the target outlet water level by calculation on the basis of the water level calculation model. Therefore, the accurate target outlet water level can be obtained by calculation.

In combination with the first aspect, in a first implementation of the first aspect, the step of acquiring the inlet flow rate corresponding to the inlet section within the first time period and the outlet flow rate of the outlet section within the second time period includes:
acquiring a preset inlet flow rate corresponding to the inlet section and a preset outlet flow rate corresponding to the outlet section in a preset time period;
acquiring a first peak value corresponding to the preset inlet flow rate and a second peak value corresponding to the preset outlet flow rate; and
on the basis of the relationship between the first peak value and the second peak value, acquiring the inlet flow rate and the outlet flow rate.

In the method for predicting a water level of an outlet section provided in the embodiments of the disclosure, the preset inlet flow rate corresponding to the inlet section and the preset outlet flow rate corresponding to the outlet section in the preset time period are acquired. Then, the first peak value corresponding to the preset inlet flow rate and the second peak value corresponding to the preset outlet flow rate are acquired; and on the basis of the relationship between the first peak value and the second peak value, the inlet flow rate and the outlet flow rate are acquired. In this way, the accuracy of the inlet flow rate and the outlet flow rate obtained by means of acquiring can be guaranteed.

In combination with the first implementation of the first aspect, in a second implementation of the first aspect, the step of on the basis of the relationship between the first peak value and the second peak value, acquiring the inlet flow rate and the outlet flow rate includes:
acquiring a change rule of the inlet flow rate corresponding to the inlet section;
on the basis of the change rule of the inlet flow rate, acquiring the inlet flow rate that meets a preset rule requirement within the first time period;
subtracting the time corresponding to the first peak value from the time corresponding to the second peak value, so as to obtain the time difference between the first time period and the second time period;
adding the time difference to the first time period, so as to obtain the second time period by calculation; and
on the basis of the second time period, acquiring the outlet flow rate.

In the method for predicting a water level of an outlet section provided in the embodiments of the disclosure, the change rule of an inlet flow rate corresponding to the inlet section is acquired; and on the basis of the change rule of the inlet flow rate, the inlet flow rate that meets the preset rule requirement within the first time period is acquired. In this way, the accuracy of the obtained inlet flow rate can be guaranteed. Then, the time corresponding to the first peak value is subtracted from the time corresponding to the second peak value, so as to obtain the time difference between the first time period and the second time period. Therefore, the accuracy of the time difference, obtained by means of calculation, between the first time period and the second time period can be guaranteed. By means of adding the time difference to the first time period, so as to obtain the second time period by means of calculation, the accuracy of the obtained second time period can be guaranteed. Then, on the basis of the second time period, the outlet flow rate is acquired. In this way, the accuracy of the acquired outlet flow rate can be guaranteed.

In combination with the first aspect, in a third implementation of the first aspect, the step of on the basis of the difference relationship between the inlet flow rate and the outlet flow rate, calculating the change value of the reservoir capacity between the inlet section and the outlet section includes:
calculating a flow rate difference value between the inlet flow rate and the outlet flow rate; and
within the first time period, performing time integration on the flow rate difference value, so as to obtain the change value of the reservoir capacity between the inlet section and the outlet section.

In the method for predicting a water level of an outlet section provided in the embodiments of the disclosure, the flow rate difference value between the inlet flow rate and the outlet flow rate is calculated. In this way, the accuracy of the flow rate difference value, obtained by means of calculation, between the inlet flow rate and the outlet flow rate can be guaranteed. Then, within the first time period, time integration is performed on the flow rate difference value, so as to obtain the change value of the reservoir capacity between the inlet section and the outlet section. In this way, the accuracy of the change value of the reservoir capacity, obtained by means of calculation, between the inlet section and the outlet section can be guaranteed.

In combination with the first aspect, in a fourth implementation of the first aspect, the step of on the basis of the relationship among the change value of the reservoir capacity, the inlet flow rate and the initial water level in the second time period corresponding to the outlet section, calculating the first reservoir capacity of continuous sections between the inlet section and the outlet section within the second time period includes;
on the basis of the correspondence relationship among the inlet flow rate, the initial water level in the second time period corresponding to the outlet section and the reservoir capacity, determining a second reservoir capacity corresponding to the inlet section at an initial moment of the first time period; and
adding the second reservoir capacity to the change value of the reservoir capacity, so as to obtain the first reservoir capacity.

In the method for predicting a water level of an outlet section provided in the embodiments of the disclosure, on the basis of the correspondence relationship among the inlet flow rate, the initial water level in the second time period corresponding to the outlet section and the reservoir capacity, the second reservoir capacity corresponding to the inlet section at the initial moment of the first time period is determined. In this way, the accuracy of the second reservoir capacity, obtained by means of calculation, of the inlet section at the first time period can be guaranteed. Then, the second reservoir capacity and the change value of the reservoir capacity are added, so as to obtain the first reservoir capacity. Therefore, the accuracy of the obtained first reservoir capacity can be guaranteed.

In combination with the first aspect, in a fifth implementation of the first aspect, the step of inputting the first reservoir capacity and the inlet flow rate into the water level calculation model, and outputting the target outlet water level of the outlet section in the second time period includes:
acquiring historical water-flow monitoring data, wherein the historical water-flow monitoring data includes data of inlet flow rates, outlet water levels and reservoir capacities corresponding to a plurality of rivers and/or reservoirs;
fitting the inlet flow rates, outlet water levels and reservoir capacities in the historical water-flow monitoring data, so as to generate the water level calculation model; and
inputting the first reservoir capacity and the inlet flow rate into the water level calculation model, and outputting the target outlet water level of the outlet section in the second time period.

In the method for predicting a water level of an outlet section provided in the embodiments of the disclosure, the historical water-flow monitoring data is acquired, and the inlet flow rates, outlet water levels and reservoir capacities in the historical water-flow monitoring data are fitted, so as to generate the water level calculation model. In this way, the accuracy of the generated water level calculation model can be guaranteed. The first reservoir capacity and the inlet flow rate are inputted into the water level calculation model, and the target outlet water level of the outlet section in the second time period is outputted. In this way, the accuracy of the outputted target outlet water level of the outlet section in the second time period can be guaranteed.

In combination with the first aspect, in a sixth implementation of the first aspect, after the target outlet water level of the outlet section in the second time period is outputted, the method further includes:
acquiring a real outlet water level of the outlet section within the second time period;
comparing the real outlet water level with the target outlet water level; and
when a difference value between the real outlet water level and the target outlet water level exceeds a preset difference value range, adjusting the time difference between the first time period and the second time period, then acquiring the inlet flow rate and the outlet flow rate again, and re-calculating the target outlet water level.

In the method for predicting a water level of an outlet section provided in the embodiments of the disclosure, the real outlet water level of the outlet section within the second time is acquired; the real outlet water level is compared with the target outlet water level; and when the difference value between the real outlet water level and the target outlet water level exceeds the preset difference value range, the time difference between the first time period and the second time period is adjusted, then the inlet flow rate and the outlet flow rate are acquired again, and the target outlet water level is re-calculated. In this way, the accuracy of the target outlet water level obtained by means of calculation can be guaranteed, such that the inaccuracy of the target outlet water level caused by the inaccurate time difference between the first time period and the second time period can be avoided.

According to a second aspect, an embodiment of the disclosure provides an apparatus for predicting a water level of an outlet section, and the apparatus includes:
a first acquisition module, configured to acquire an inlet flow rate corresponding to an inlet section within a first time period and an outlet flow rate of an outlet section within a second time period, wherein the first time period and the second time period have the same time duration, and the time difference between the first time period and the second time period is the time for water flowing from the inlet section to the outlet section;
a first calculation module, configured to, on the basis of a difference relationship between the inlet flow rate and the outlet flow rate, calculate a change value of a reservoir capacity between the inlet section and the outlet section;
a second calculation module is configured to, on the basis of a relationship among the change value of the reservoir capacity, the inlet flow rate and an initial water level in the second time period corresponding to the outlet section, calculate a first reservoir capacity of continuous sections between the inlet section and the outlet section within the second time period; and
an output module, configured to input the first reservoir capacity and the inlet flow rate into a water level calculation model, and output a target outlet water level of the outlet section in the second time period, wherein the water level calculation model is generated by fitting on the basis of the relationship among the inlet flow rate, the outlet water level and the reservoir capacity.

In the apparatus for predicting a water level of an outlet section provided in the embodiments of the disclosure, the inlet flow rate corresponding to the inlet section within the first time period and the outlet flow rate of the outlet section within the second time period are acquired. Then, on the basis of the difference relationship between the inlet flow rate and the outlet flow rate, the change value of the reservoir capacity between the inlet section and the outlet section is calculated, such that the accuracy of the change value of the reservoir capacity obtained by calculation can be guaranteed. On the basis of the change value of the reservoir capacity and the relationship between the inlet flow rate and the initial water level in the second time period corresponding to the outlet section, the first reservoir capacity of continuous sections between the inlet section and the outlet section within the second time period is calculated. In this way, the first reservoir capacity, obtained by calculation, of the continuous sections between the inlet section and the outlet section within the second time period can be guaranteed. Then, the first reservoir capacity and the inlet flow rate are inputted into the water level calculation model, and the target outlet water level of the outlet section in the second time period is outputted. In this way, the accuracy of the target outlet water level obtained by calculation can be guaranteed.

According to a third aspect, an embodiment of the disclosure provides an electronic device. The electronic device includes a memory and a processor. The memory and the processor are communicatively connected to each other. The memory stores computer instructions. The processor executes the computer instructions, so as to execute the method for predicting a water level of an outlet section in the first aspect or in any one of the implementations of the first aspect.

According to a fourth aspect, an embodiment of the disclosure provides a computer-readable storage medium. The computer-readable storage medium stores computer instructions. The computer instructions are used to cause a computer to execute the method for predicting a water level of an outlet section in the first aspect or in any one of the implementations of the first aspect.

### BRIEF DESCRIPTION OF THE DRAWINGS

In order to more clearly illustrate the specific implementations of the disclosure or the technical solutions in the related art, the drawings used in the description of the specific implementations or the related art will be briefly described below. It is apparent that the drawings in the following descriptions are some implementations of the disclosure. Other drawings can be obtained from those skilled in the art according to these drawings without any creative work.
Fig. 1 is a flowchart of a method for predicting a water level of an outlet section in accordance with an embodiment of the disclosure.
Fig. 2 is a flowchart of a method for predicting a water level of an outlet section in accordance with another embodiment of the disclosure.
Fig. 3 is a flowchart of a method for predicting a water level of an outlet section in accordance with another embodiment of the disclosure.
Fig. 4 is a curve of a relationship of flow rate-water level-cumulative overflowing flow rate between sections in accordance with another embodiment of the disclosure.
Fig. 5 is a schematic diagram of entirely moving Qin along a time scale in accordance with another embodiment of the disclosure.
Fig. 6 is a schematic diagram of a target outlet water level corresponding to an outlet section in accordance with another embodiment of the disclosure.
Fig. 7 is a flowchart of a method for predicting a water level of an outlet section in accordance with another embodiment of the disclosure.
Fig. 8 is a function module diagram of an apparatus for predicting a water level of an outlet section in accordance with an embodiment of the disclosure.
Fig. 9 is a function module diagram of an apparatus for predicting a water level of an outlet section in accordance with an embodiment of the disclosure.
Fig. 10 is a schematic diagram of a hardware structure of an electronic device in accordance with an embodiment of the disclosure.

### DETAILED DESCRIPTION

In order to make objectives, technical solutions, and advantages of embodiments of the disclosure clearer, the technical solutions in the embodiments of the disclosure will be clearly and completely described below in combination with the drawings in the embodiments of the disclosure. It is apparent that the described embodiments are part of the embodiments of the disclosure, not all the embodiments. Based on the embodiments in the disclosure, all other embodiments obtained by those of skilled in the art without creative work shall fall within the protection scope of the disclosure.

It is to be noted that, an embodiment of the disclosure provides a method for predicting a water level of an outlet section. An execution subject of the method may be an apparatus for predicting a water level of an outlet section. The apparatus for predicting a water level of an outlet section may be implemented as part of all of an electronic device by means of software, hardware, or a combination of the software and the hardware. The electronic device may be a server or a terminal. The server in the embodiments of the disclosure may be a server or a server cluster composed of a plurality of servers. The terminal in the embodiments of the disclosure may be other intelligent hardware devices such as a smart phone, a personal computer, a tablet computer, a wearable device and an intelligent robot. In the following method methods, the execution subject being the electronic device is used as an example for description.

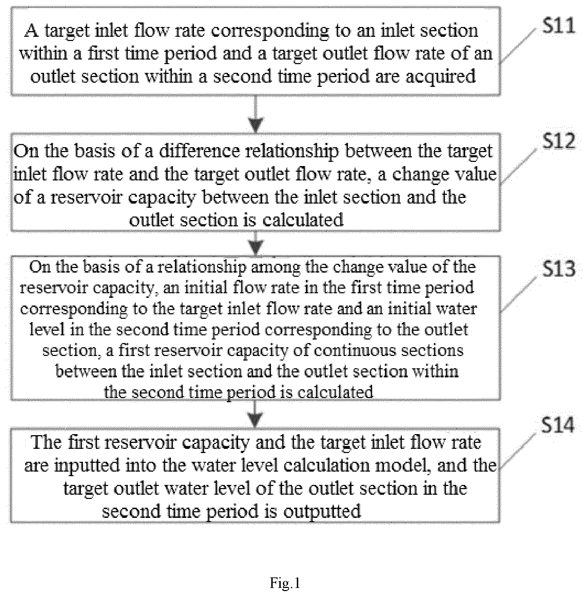

In an embodiment of the disclosure, as shown in Fig. 1, provided is a method for predicting a water level of an outlet section. For example, the method is applied to the electronic device, and includes the following steps.

At S11, a target inlet flow rate corresponding to an inlet section within a first time period and a target outlet flow rate of an outlet section within a second time period are acquired.

The first time period and the second time period have the same time duration; and the time difference between the first time period and the second time period is the time for water flowing from the inlet section to the outlet section. Exemplarily, assuming that the first time period is 6:00-10:00 on August 28, 2021, the time for water flowing from the inlet section to the outlet section is two hours, then the second time period may be 8:00-12:00 on August 28, 2021. The first time period and the second time period are not specifically limited in the embodiments of the disclosure.

In an optional implementation of the disclosure, the electronic device may receive the target inlet flow rate corresponding to the inlet section within the first time period and the target outlet flow rate of the outlet section within the second time period that are inputted by a user.

In an optional implementation of the disclosure, the electronic device may also intercept the target inlet flow rate corresponding to the inlet section within the first time period and the target outlet flow rate of the outlet section within the second time period according to inlet flow rate characteristics corresponding to the inlet section and outlet flow rate characteristics corresponding to the outlet section within a preset time period.

This step is described in detail below.

At S12, on the basis of a difference relationship between the target inlet flow rate and the target outlet flow rate, a change value of a reservoir capacity between the inlet section and the outlet section is calculated.

Specifically, the electronic device may calculate the flow rate difference value between the target inlet flow rate and the target outlet flow rate, and then calculate the change value of the reservoir capacity between the inlet section and the outlet section on the basis of the flow rate difference value, obtained by means of calculation, between the target inlet flow rate and the target outlet flow rate.

This step is described in detail below.

At S13, on the basis of a relationship among the change value of the reservoir capacity, an initial flow rate in the first time period corresponding to the target inlet flow rate and an initial water level in the second time period corresponding to the outlet section, a first reservoir capacity of continuous sections between the inlet section and the outlet section within the second time period is calculated.

Specifically, the electronic device may calculate a second reservoir capacity corresponding to the inlet section at the initial moment of the first time period on the basis of an initial flow rate in the first time period corresponding to the target inlet flow rate and an initial water level in the second time period corresponding to the outlet section. Then, on the basis of the second reservoir capacity corresponding to the inlet section at the initial moment of the first time period and the change value of the reservoir capacity, the first reservoir capacity of the outlet section within the second time period is obtained by means of calculation.

This step is described in detail below.

At S14, the first reservoir capacity and the target inlet flow rate are inputted into the water level calculation model, and the target outlet water level of the outlet section in the second time period is outputted.

The water level calculation model is generated by fitting on the basis of the relationship among the inlet flow rate, the outlet water level and the reservoir capacity.

In an optional implementation of the disclosure, the electronic device may acquire a one-dimensional hydrodynamic model, and then generate the water level calculation model by means of fitting on the basis of the one-dimensional hydrodynamic model and the relationship among the inlet flow rate, the outlet water level and the reservoir capacity.

Then, the electronic device may input the first reservoir capacity and the target inlet flow rate into the water level calculation model, and output the target outlet water level of the outlet section in the second time period.

This step is described in detail below.

In the method for predicting a water level of an outlet section provided in the embodiments of the disclosure, the target inlet flow rate corresponding to the inlet section within the first time period and the target outlet flow rate of the outlet section within the second time period are acquired. Then, on the basis of the difference relationship between the target inlet flow rate and the target outlet flow rate, the change value of the reservoir capacity between the inlet section and the outlet section is calculated, such that the accuracy of the change value of the reservoir capacity obtained by calculation can be guaranteed. On the basis of the relationship among the change value of the reservoir capacity and the relationship between the initial flow rate in the first time period corresponding to the target inlet flow rate and the initial water level in the second time period corresponding to the outlet section, the first reservoir capacity of continuous sections between the inlet section and the outlet section within the second time period is calculated. In this way, the first reservoir capacity, obtained by calculation, of the continuous sections between the inlet section and the outlet section within the second time period can be guaranteed. Then, the first reservoir capacity and the target inlet flow rate are inputted into the water level calculation model, and the target outlet water level of the outlet section in the second time period is outputted. In this way, the accuracy of the target outlet water level obtained by calculation can be guaranteed.

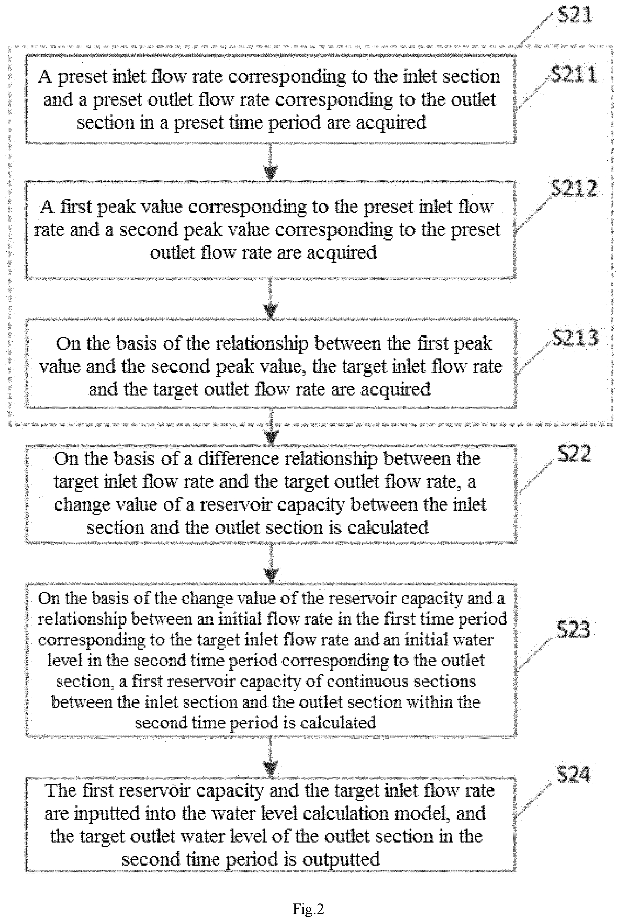

In an embodiment of the disclosure, as shown in Fig. 2, provided is a method for predicting a water level of an outlet section. For example, the method is applied to the electronic device, and includes the following steps.

At S21, a target inlet flow rate corresponding to an inlet section within a first time period and a target outlet flow rate of an outlet section within a second time period are acquired.

The first time period and the second time period have the same time duration; and the time difference between the first time period and the second time period is the time for water flowing from the inlet section to the outlet section.

In an optional implementation of the disclosure, S21 of "acquiring the target inlet flow rate corresponding to the inlet section within the first time period and the target outlet flow rate of the outlet section within the second time period" may include the following steps.

At S211, a preset inlet flow rate corresponding to the inlet section and a preset outlet flow rate corresponding to the outlet section in a preset time period are acquired.

Specifically, the electronic device may monitor a change process of flow rates, flow velocities and water levels between the inlet section and the outlet section at different positions and different water depths on the basis of a series of sensors that are disposed between the inlet section and the outlet section.

In an optional implementation of the disclosure, a preset inlet flow rate is relatively constant before the first time period, and a preset outlet flow rate corresponding to the outlet section is relatively constant before the second time period.

The electronic device acquires the preset inlet flow rate corresponding to the inlet section in the preset time period and the preset outlet flow rate corresponding to the outlet section according to the change process, obtained by means of prediction, of the flow rates, flow velocities and water levels at different water depths.

Exemplarily, the electronic device may acquire the preset inlet flow rate corresponding to the inlet section and the preset outlet flow rate corresponding to the outlet section within the time period of 4:00-14:00 on August 28, 2021.

At S212, a first peak value corresponding to the preset inlet flow rate and a second peak value corresponding to the preset outlet flow rate are acquired.

Specifically, the electronic device may generate a preset inlet flow rate curve and a preset outlet flow rate curve according to the preset inlet flow rate and the preset outlet flow rate, and according to the preset inlet flow rate curve and the preset outlet flow rate curve, acquire the first peak value corresponding to the preset inlet flow rate and the second peak value corresponding to the preset outlet flow rate.

At S213, on the basis of the relationship between the first peak value and the second peak value, the target inlet flow rate and the target outlet flow rate are acquired.

In an optional implementation of the disclosure, S213 of "on the basis of the relationship between the first peak value and the second peak value, acquiring the target inlet flow rate and the target outlet flow rate" may include the following steps.
(1) The change rule of an inlet flow rate corresponding to the inlet section is acquired.
   Specifically, the electronic device may monitor a change process of flow rates, flow velocities and water levels between the inlet section and the outlet section at different positions and different water depths on the basis of a series of sensors that are disposed between the inlet section and the outlet section, so as to acquire the change rule of the inlet flow rate corresponding to the inlet section.
(2) On the basis of the change rule of the inlet flow rate, the target inlet flow rate that meets a preset rule requirement within the first time period is acquired.

Specifically, the electronic device may acquire the target inlet flow rate that meets the preset rule requirement within the first time period on the basis of the change rule of the inlet flow rate.

Exemplarily, the electronic device may acquire, on the basis of the change rule of the inlet flow rate, the target inlet flow rate that meets the preset rule requirement of "constant flow-non-constant flow" within the time period of 6:00-10:00 on August 28, 2021.

(3) The time corresponding to the first peak value is subtracted from the time corresponding to the second peak value, so as to obtain the time difference between the first time period and the second time period.

Specifically, the electronic device may subtract the time corresponding to the first peak value from the time corresponding to the second peak value, so as to obtain the time difference between the first time period and the second time period.

The time difference between the first time period and the second time period may represent the time for water flowing from the inlet section to the outlet section. In addition, the electronic device may determine the time difference between the first time period and the second time period as a time cycle.

Exemplarily, assuming that the time corresponding to the second peak value is 10:00 on August 28, 2021, and the time corresponding to the first peak value is 8:00 on August 28, 2021, the electronic device may determine the time difference between the first time period and the second time period as two hours.

(4) The time difference is added with the first time period, so as to obtain the second time period by calculation.

Specifically, after acquiring the target inlet flow rate that meets the preset rule requirement within the first time period, the electronic device may add the first time period and the time difference, to obtain the second time period by means of calculation.

Exemplarily, after acquiring the target inlet flow rate corresponding to the inlet section within the first time period of 6:00-10:00 on August 28, 2021, the electronic device may add 6:00-10:00 on August 28, 2021 and the time difference of two hours, so as to obtain the second time period of 8:00-12:00 on August 28,2021.

(5) On the basis of the second time period, the target outlet flow rate is acquired.

Specifically, after acquiring the second time period, the electronic device may acquire the target outlet flow rate corresponding to the outlet section on the basis of the second time period.

At S22, on the basis of a difference relationship between the target inlet flow rate and the target outlet flow rate, a change value of a reservoir capacity between the inlet section and the outlet section is calculated.

For this step, refer to the instruction of S12 in Fig. 1.

At S23, on the basis of a relationship among the change value of the reservoir capacity, an initial flow rate in the first time period corresponding to the target inlet flow rate and an initial water level in the second time period corresponding to the outlet section, a first reservoir capacity of continuous sections between the inlet section and the outlet section within the second time period is calculated.

For this step, refer to the instruction of S13 in Fig. 1.

At S24, the first reservoir capacity and the target inlet flow rate are inputted into the water level calculation model, and the target outlet water level of the outlet section in the second time period is outputted.

The water level calculation model is generated by fitting on the basis of the relationship among the inlet flow rate, the outlet water level and the reservoir capacity.

For this step, refer to the instruction of S14 in Fig. 1.

In the method for predicting a water level of an outlet section provided in the embodiments of the disclosure, the preset inlet flow rate corresponding to the inlet section and the preset outlet flow rate corresponding to the outlet section in the preset time period are acquired. Then, a first peak value corresponding to the preset inlet flow rate and a second peak value corresponding to the preset outlet flow rate are acquired. The change rule of an inlet flow rate corresponding to the inlet section is acquired; and on the basis of the change rule of the inlet flow rate, the target inlet flow rate that meets the preset rule requirement within the first time period is acquired. In this way, the accuracy of the obtained target inlet flow rate can be guaranteed. Then, the time corresponding to the first peak value is subtracted from the time corresponding to the second peak value, so as to obtain the time difference between the first time period and the second time period. Therefore, the accuracy of the time difference, obtained by means of calculation, between the first time period and the second time period can be guaranteed. By means of adding the time difference to the first time period, so as to obtain the second time period by means of calculation, the accuracy of the obtained second time period can be guaranteed. Then, on the basis of the second time period, the target outlet flow rate is acquired. In this way, the accuracy of the acquired target outlet flow rate can be guaranteed.

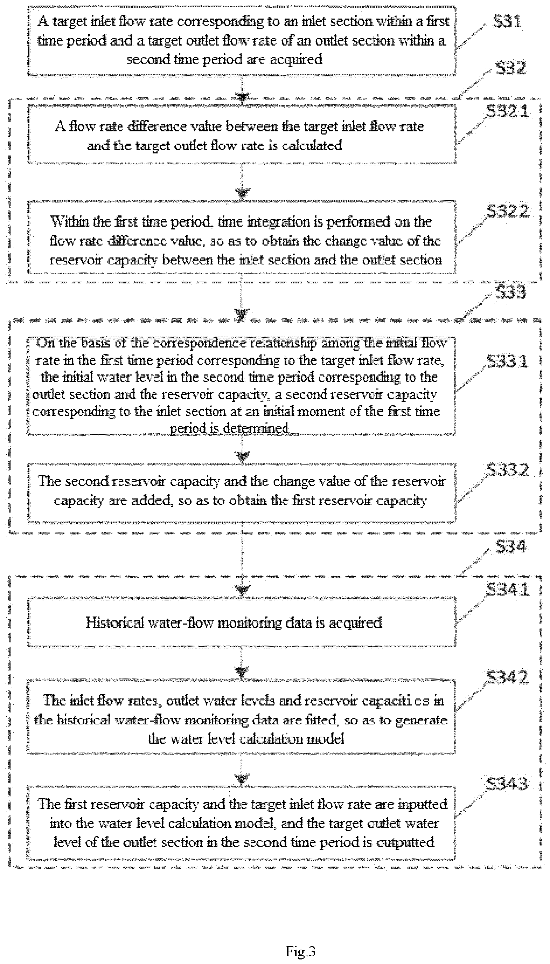

In an embodiment of the disclosure, as shown in Fig. 3, provided is a method for predicting a water level of an outlet section. For example, the method is applied to the electronic device, and includes the following steps.

At S31, a target inlet flow rate corresponding to an inlet section within a first time period and a target outlet flow rate of an outlet section within a second time period are acquired.

The first time period and the second time period have the same time duration; and the time difference between the first time period and the second time period is the time for water flowing from the inlet section to the outlet section.

For this step, refer to the instruction of S21 in Fig. 2, which is not specifically introduced herein.

At S32, on the basis of a difference relationship between the target inlet flow rate and the target outlet flow rate, a change value of a reservoir capacity between the inlet section and the outlet section is calculated.

In an optional implementation of the disclosure, S32 of "on the basis of the difference relationship between the target inlet flow rate and the target outlet flow rate, calculating the change value of the reservoir capacity between the inlet section and the outlet section" may include the following steps.

At S321, a flow rate difference value between the target inlet flow rate and the target outlet flow rate is calculated.

Specifically, the electronic device may subtract the target inlet flow rate from the target outlet flow rate, so as to obtain the flow rate difference value between the target inlet flow rate and the target outlet flow rate.

At S322, within the first time period, time integration is performed on the flow rate difference value, so as to obtain the change value of the reservoir capacity between the inlet section and the outlet section.

Specifically, the electronic device may perform, within the first time period, time integration on the flow rate difference value, so as to obtain the change value of the reservoir capacity between the inlet section and the outlet section.

In another optional implementation of the disclosure, the electronic device may further use a cumulative sum method to perform cumulative sum on the flow rate difference value, so as to obtain the change value of the reservoir capacity between the inlet section and the outlet section.

At S33, on the basis of a relationship among the change value of the reservoir capacity, an initial flow rate in the first time period corresponding to the target inlet flow rate and an initial water level in the second time period corresponding to the outlet section, a first reservoir capacity of continuous sections between the inlet section and the outlet section within the second time period is calculated.

In an optional implementation of the disclosure, S33 of "on the basis of the difference relationship between the target inlet flow rate and the target outlet flow rate, calculating the change value of the reservoir capacity between the inlet section and the outlet section" may include the following steps.

At S331, on the basis of the correspondence relationship among the initial flow rate in the first time period corresponding to the target inlet flow rate, the initial water level in the second time period corresponding to the outlet section and the reservoir capacity, a second reservoir capacity corresponding to the inlet section at an initial moment of the first time period is determined.

Specifically, the electronic device may seek the second reservoir capacity corresponding to the inlet section at the initial moment of the first time period corresponding to the initial flow rate in the first time period corresponding to the target inlet flow rate and the initial water level in the second time period corresponding to the outlet section on the basis of the correspondence relationship among the initial flow rate in the first time period corresponding to the target inlet flow rate, the initial water level in the second time period corresponding to the outlet section and the reservoir capacity, so as to determine the second reservoir capacity corresponding to the inlet section at the initial moment of the first time period.

In an optional implementation of the disclosure, the electronic device may further monitor the change process of flow rates, flow velocities and water levels between the inlet section and the outlet section at different positions and different water depths on the basis of the series of sensors that are disposed between the inlet section and the outlet section. Then, the electronic device use, according to the data of the water level, the flow rate and the flow velocity obtained by means of prediction, the time as an independent variable, to construct a three-dimensional coordinate (which is about flow rate, water level, and reservoir capacity). A series of data commonly form a hydrological database between the sections.

The electronic device acquires the target inlet flow rate and target inlet water level corresponding to the inlet section, and then determines, according to a relational expression of the flow rate, the water level and the reservoir capacity constructed in the hydrological database, the second reservoir capacity of the inlet section within the first time period.

At S332, the second reservoir capacity and the change value of the reservoir capacity are added, so as to obtain the first reservoir capacity.

Specifically, the electronic device adds the second reservoir capacity and the change value of the reservoir capacity, so as to obtain the first reservoir capacity of continuous sections between the inlet section and the outlet section within the second time period.

At S34, the first reservoir capacity and the target inlet flow rate are inputted into the water level calculation model, and the target outlet water level of the outlet section in the second time period is outputted.

The water level calculation model is generated by fitting on the basis of the relationship among the inlet flow rate, the outlet water level and the reservoir capacity.

In an optional implementation of the disclosure, S34 of "inputting the first reservoir capacity and the target inlet flow rate into the water level calculation model, and outputting the target outlet water level of the outlet section in the second time period" may include the following steps.

At S341, historical water-flow monitoring data is acquired.

The historical water-flow monitoring data includes data of inlet flow rates, outlet water levels and reservoir capacities corresponding to a plurality of rivers and/or reservoirs.

Specifically, the electronic device may receive the historical water-flow monitoring data inputted by a user, or may receive the historical water-flow monitoring data sent by other devices. In the embodiments of the disclosure, the manner that the electronic device acquires the historical water-flow monitoring data is not specifically limited.

At S342, the inlet flow rates, outlet water levels and reservoir capacities in the historical water-flow monitoring data are fitted, so as to generate the water level calculation model.

Specifically, after acquiring the historical water-flow monitoring data, the electronic device may fit the inlet flow rates, outlet water levels and reservoir capacities in the historical water-flow monitoring data, and then generate the water level calculation model.

At S343, the first reservoir capacity and the target inlet flow rate are inputted into the water level calculation model, and the target outlet water level of the outlet section in the second time period is outputted.

Specifically, after obtaining the water level calculation model by means of fitting, the electronic device may input the first reservoir capacity and the target inlet flow rate into the water level calculation model, and then, on the basis of the water level calculation model, calculate the target outlet water level of the outlet section in the second time period.

In the method for predicting a water level of an outlet section provided in the embodiments of the disclosure, the historical water-flow monitoring data is acquired, and the inlet flow rates, outlet water levels and reservoir capacities in the historical water-flow monitoring data are fitted, so as to generate the water level calculation model. In this way, the accuracy of the generated water level calculation model can be guaranteed. The first reservoir capacity and the target inlet flow rate are inputted into the water level calculation model, and the target outlet water level of the outlet section in the second time period is outputted. In this way, the accuracy of the outputted target outlet water level of the outlet section in the second time period can be guaranteed.

In order to better describe the method for predicting a water level of an outlet section provided in the embodiments of the disclosure, in an optional implementation of the disclosure, the method for predicting a water level of an outlet section may further include the following steps.

Step one, on the basis of monitoring data obtained by related instruments that are arranged between the sections, a database about a flow rate and water level process is constructed. Specifically, the method may include the following steps.

Step 1: a series of sensors are arranged between two sections at equal intervals and with equal water depths, so as to monitor the change process of flow rates, flow velocities and water levels between the sections at different positions and different water depths.

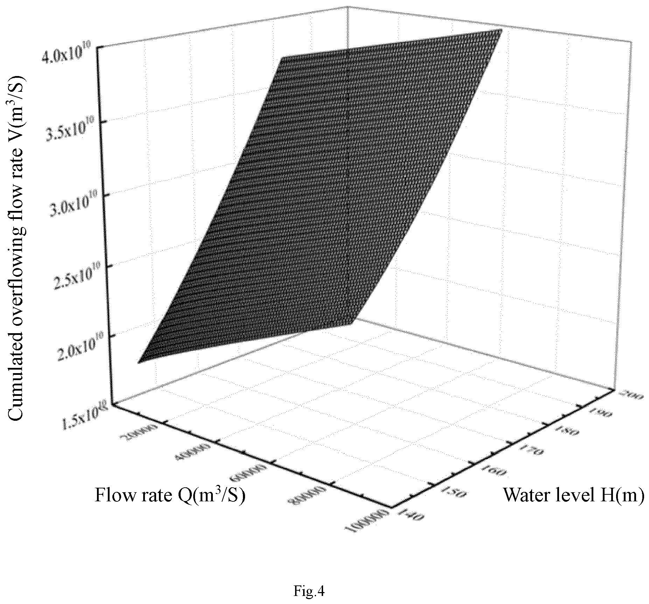

Step 2: data uploaded by the sensors are used to construct the three-dimensional coordinate (which is about flow rate, water level, and cumulative overflowing flow) by using the time as the independent variable, and a series of data commonly form a hydrological database between the sections. The curve of a relationship of flow-water level-cumulative overflowing flow between sections is shown in Fig. 4.

Step 3: the water level and flow rate (Hᵢₙ, Qᵢₙ) at a section inlet are used as an inlet boundary condition, and the flow rate (Qₒᵤₜ) at a section outlet is used as an outlet boundary condition, so as to package the database for later interpolation calling.

Step two: by means of taking the hysteresis characteristics of the non-constant flow into consideration, the inlet flow rate (Qᵢₙ) is periodically translated. Specifically, the method may include the following steps.

Step 1: the inlet flow rate Qᵢₙ is called from the database, and is kept as an initial condition; according to a Q-H relationship in the database, the outlet flow rate Qₒᵤₜ corresponding to the inlet flow rate is calculated; and a flow rate change hydrograph of Qin-t and Qₒᵤₜ-t is drawn.

Step 2: respective moments t₁ and t₂ corresponding to peaks of Qₘ and Qₒᵤₜ are obtained by means of statistics and searching.

Step 3: a translation cycle is calculated, that is, Dt=t₂-t₁.

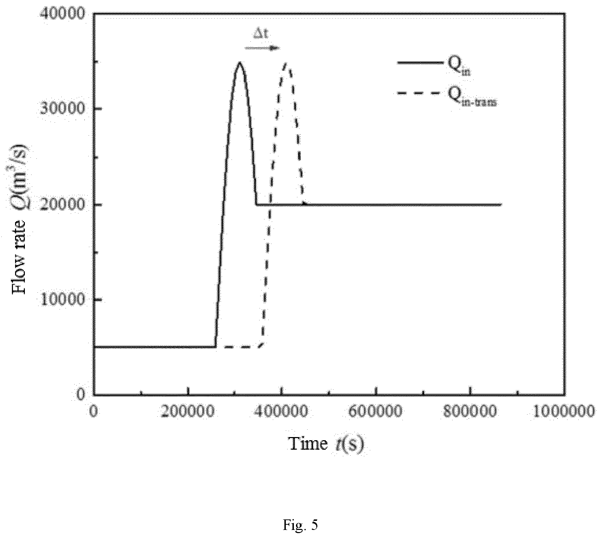

Step 4: as shown in Fig. 5, by means of taking the hysteresis characteristics of the non-constant flow into consideration, by using Dt as a cycle, Qₘ is entirely translated along a time scale; and the inlet flow rate corresponding to the translated moment is recorded as Qᵢₙ₋ₜᵣₐₙₛ, so as to correspondingly draw a Qᵢₙ₋ₜᵣₐₙₛ-t flow rate change process curve.

Step three: an outlet water level is divided into a stable water level before translation and an unsteady water level after translation, which are respectively processed by means of an interpolation method; and water level curves before and after translation are combined, so as to obtain a calculated outlet water level hydrograph. Specifically, the method may include the following steps.

Step 1: according to the flow rate change hydrograph of Qᵢₙ-t and Qₒᵤₜ-t, by means of using an integration or cumulative sum method, a cumulated overflowing flow rate DV between the sections is calculated.

Step 2: the database is searched step by step, to seek to obtain an initial cumulated overflowing flow rate Vᵢₙᵢ corresponding to Qᵢₙ and Hᵢₙ under an initial condition, so as to further obtain DVₗₐₜₜₑᵣ=DV+Vᵢₙᵢ.

Step 3: according to the existing overflowing flow V in the database and a correlation between the flow rate Q and water level H between the sections, DVₗₐₜₜₑᵣ and Qₒᵤₜ are inputted; and the corresponding water level Hₗₐₜₜₑᵣ is obtained by means of calculation by using a bivariate bilinear interpolation method, and the water level Hₗₐₜₜₑᵣ is regarded as a stabilized outlet water level corresponding to a constant flow.

Step 4: according to the flow rate change hydrograph of Qᵢₙ₋ₜᵣₐₙₛ-t and Qₒᵤₜ-t, by means of using an integration or cumulative sum method, a cumulated overflowing flow rate DV' between the sections is calculated.

Step 5: corresponding to the initial cumulated overflowing flow rate Vini obtained by means of searching in Step 2, calculation is further performed to obtain DV_{former}=DV' +Vᵢₙᵢ.

Step 6: according to the existing overflowing flow rate V in the database and a correlation between the flow rate Q and water level H between the sections, DV_{former} and Qᵢₙ are inputted; and the corresponding water level H_{former} is obtained by means of calculation by using the bivariate bilinear interpolation method, and the water level H_{former} is regarded as an un-stabilized outlet water level at a non-constant flow phase.

Step 7: water level change process curves of the stable outlet water level Hₗₐₜₜₑᵣ-t and the unstable outlet water level H_{former}-t are respectively drawn.

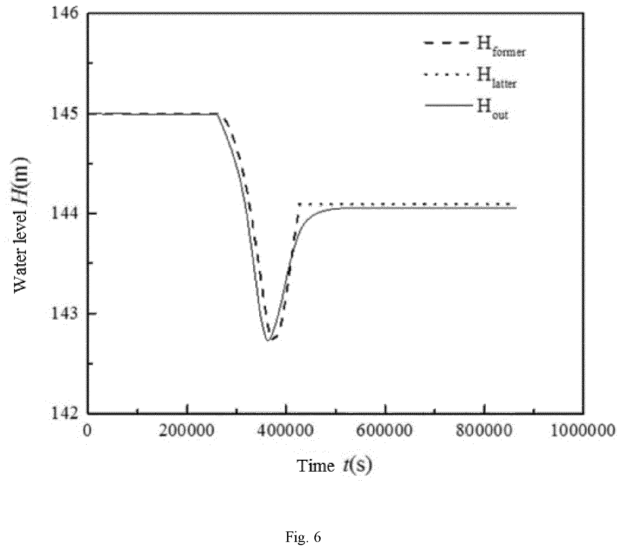

Step 8: two curves in Step 7 are combined, so as to obtained the calculated outlet water level hydrograph. Fig. 6 is a schematic diagram of a target outlet water level obtained by means of calculation according to the method.

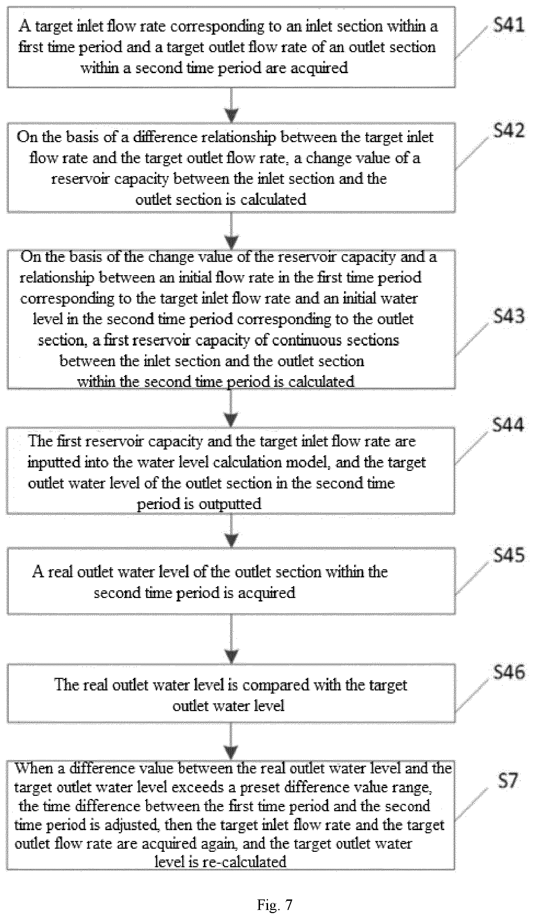

In an embodiment of the disclosure, as shown in Fig. 7, provided is a method for predicting a water level of an outlet section. For example, the method is applied to the electronic device, and includes the following steps.

At S41, a target inlet flow rate corresponding to an inlet section within a first time period and a target outlet flow rate corresponding to an outlet section within a second time period are acquired.

The first time period and the second time period have the same time duration; and the time difference between the first time period and the second time period is the time for water flowing from the inlet section to the outlet section.

For this step, refer to the instruction of S31 in Fig. 3, which is not specifically introduced herein.

At S42, on the basis of a difference relationship between the target inlet flow rate and the target outlet flow rate, a change value of a reservoir capacity between the inlet section and the outlet section is calculated.

For this step, refer to the instruction of S32 in Fig. 3, which is not specifically introduced herein.

At S43, on the basis of a relationship among the change value of the reservoir capacity, an initial flow rate in the first time period corresponding to the target inlet flow rate and an initial water level in the second time period corresponding to the outlet section, a first reservoir capacity of continuous sections between the inlet section and the outlet section within the second time period is calculated.

For this step, refer to the instruction of S33 in Fig. 3, which is not specifically introduced herein.

At S44, the first reservoir capacity and the target inlet flow rate are inputted into the water level calculation model, and the target outlet water level of the outlet section in the second time period is outputted.

The water level calculation model is generated by fitting on the basis of the relationship among the inlet flow rate, the outlet water level and the reservoir capacity.

For this step, refer to the instruction of S34 in Fig. 3, which is not specifically introduced herein.

At S45, A real outlet water level of the outlet section within the second time period is acquired.

Specifically, the electronic device may acquire the real outlet water level of the outlet section within the second time period on the basis of the series of sensors that are disposed between the inlet section and the outlet section.

At S46, the real outlet water level is compared with the target outlet water level.

Specifically, after acquiring the real outlet water level of the outlet section within the second time period, the electronic device may compare the real outlet water level with the target outlet water level.

At S47, when a difference value between the real outlet water level and the target outlet water level exceeds a preset difference value range, the time difference between the first time period and the second time period is adjusted, then the target inlet flow rate and the target outlet flow rate are acquired again, and the target outlet water level is re-calculated.

Specifically, when the difference value between the real outlet water level and the target outlet water level exceeds the preset difference value range, the electronic device determines that the current target outlet water level error is relatively large. Therefore, the electronic device needs to adjust the time difference between the first time period and the second time period, then acquires the target inlet flow rate and the target outlet flow rate, so as to calculate the target outlet water level, and ends until the difference value between the real outlet water level and the target outlet water level does not exceed the preset difference value range.

When the difference value between the real outlet water level and the target outlet water level is within the preset difference value range, the electronic device determines that the current target outlet water level error is relatively small. At this point, the electronic device completes the calculation of the target outlet water level.

In the method for predicting a water level of an outlet section provided in the embodiments of the disclosure, the real outlet water level of the outlet section within the second time is acquired; the real outlet water level is compared with the target outlet water level; and when the difference value between the real outlet water level and the target outlet water level exceeds the preset difference value range, the time difference between the first time period and the second time period is adjusted, then the target inlet flow rate and the target outlet flow rate are acquired again, and the target outlet water level is re-calculated. In this way, the accuracy of the target outlet water level obtained by means of calculation can be guaranteed, such that the inaccuracy of the target outlet water level caused by the inaccurate time difference between the first time period and the second time period can be avoided.

It is to be understood that, although the various steps in the flowcharts of Figs. 1 to 3 and 7 are displayed in sequence as indicated by the arrows, these steps are not necessarily executed in sequence in the order indicated by the arrows. Unless otherwise specified herein, there is no strict order for the execution of these steps, and these steps can be executed in other orders. Moreover, at least part of the steps in Figs. 1 to 3 and 7 may include a plurality of steps or a plurality of stages. These steps or stages are not necessarily executed at a same time, but can be executed at different times. These steps or stages are not necessarily executed in sequence, but may be executed in turns or alternately with other steps or at least a part of the steps or stages in other steps.

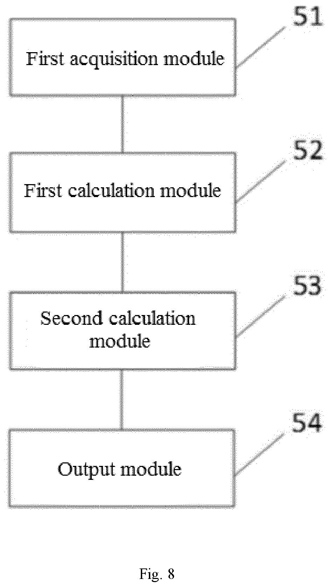

As shown in Fig. 8, this embodiment provides an apparatus for predicting a water level of an outlet section. The apparatus includes a first acquisition module, a first calculation module, a second calculation module and an output module.

The first acquisition module 51 is configured to acquire a target inlet flow rate corresponding to an inlet section within a first time period and a target outlet flow rate of an outlet section within a second time period. The first time period and the second time period have the same time duration. The time difference between the first time period and the second time period is the time for water flowing from the inlet section to the outlet section.

The first calculation module 52 is configured to, on the basis of a difference relationship between the target inlet flow rate and the target outlet flow rate, calculate a change value of a reservoir capacity between the inlet section and the outlet section.

The second calculation module 53 is configured to, on the basis of a relationship among the change value of the reservoir capacity, an initial flow rate in the first time period corresponding to the target inlet flow rate and an initial water level in the second time period corresponding to the outlet section, calculate a first reservoir capacity of continuous sections between the inlet section and the outlet section within the second time period.

The output module 54 is configured to input the first reservoir capacity and the target inlet flow rate into a water level calculation model, and output a target outlet water level of the outlet section in the second time period. The water level calculation model is generated by fitting on the basis of the relationship among the inlet flow rate, the outlet water level and the reservoir capacity.

In an embodiment of the disclosure, the first acquisition module 51 is specifically configured to: acquire a preset inlet flow rate corresponding to the inlet section and a preset outlet flow rate corresponding to the outlet section in a preset time period; acquire a first peak value corresponding to the preset inlet flow rate and a second peak value corresponding to the preset outlet flow rate; and on the basis of the relationship between the first peak value and the second peak value, acquire the target inlet flow rate and the target outlet flow rate.

In an embodiment of the disclosure, the first acquisition module 51 is specifically configured to: acquire the change rule of an inlet flow rate corresponding to the inlet section; on the basis of the change rule of the inlet flow rate, acquire the target inlet flow rate that meets a preset rule requirement within the first time period; subtract the time corresponding to the first peak value from the time corresponding to the second peak value, so as to obtain the time difference between the first time period and the second time period; add the time difference with the first time period, so as to obtain the second time period by calculation; and on the basis of the second time period, acquire the target outlet flow rate.

In an embodiment of the disclosure, the first calculation module 52 is specifically configured to: calculate a flow rate difference value between the target inlet flow rate and the target outlet flow rate; and within the first time period, perform time integration on the flow rate difference value, so as to obtain the change value of the reservoir capacity between the inlet section and the outlet section.

In an embodiment of the disclosure, the second calculation module 53 is specifically configured to: on the basis of the correspondence relationship among the initial flow rate in the first time period corresponding to the target inlet flow rate, the initial water level in the second time period corresponding to the outlet section and the reservoir capacity, determine a second reservoir capacity corresponding to the inlet section at an initial moment of the first time period; and add the second reservoir capacity and the change value of the reservoir capacity, so as to obtain the first reservoir capacity.

In an embodiment of the disclosure, the output module 54 is specifically configured to: acquire historical water-flow monitoring data, where the historical water-flow monitoring data includes data of inlet flow rates, outlet water levels and reservoir capacities corresponding to a plurality of rivers and/or reservoirs; fit the inlet flow rates, outlet water levels and reservoir capacities in the historical water-flow monitoring data, so as to generate the water level calculation model; and input the first reservoir capacity and the target inlet flow rate into the water level calculation model, and output the target outlet water level of the outlet section in the second time period.

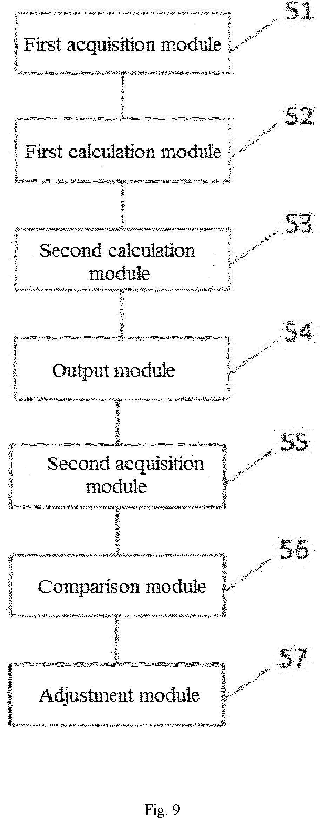

As shown in Fig. 9, this embodiment provides an apparatus for predicting a water level of an outlet section. The apparatus further includes a second acquisition module, a comparison module, and an adjustment module.

The second acquisition module 55 is configured to acquire a real outlet water level of the outlet section within the second time period.

The comparison module 56 is configured to compare the real outlet water level with the target outlet water level.

The adjustment module 57 is configured to, when a difference value between the real outlet water level with the target outlet water level exceeds a preset difference value range, adjust the time difference between the first time period and the second time period, then acquire the target inlet flow rate and the target outlet flow rate again, and re-calculate the target outlet water level.

For the specific limitation and beneficial effects of the apparatus for predicting a water level of an outlet section, refer to the limitation on the method for predicting a water level of an outlet section, and the details are not described herein again. Each module in the apparatus for predicting a water level of an outlet section may be implemented entirely or partly by software, hardware, or a combination thereof. The foregoing modules may be embedded in or independent of a processor in an electronic device in the form of hardware, or may be stored in a memory in the electronic device in the form of software, so that the processor can call and execute the steps corresponding to the foregoing modules.

An embodiment of the disclosure further provides an electronic device, which has the apparatus for predicting a water level of an outlet section shown in Fig. 8 and Fig. 9.

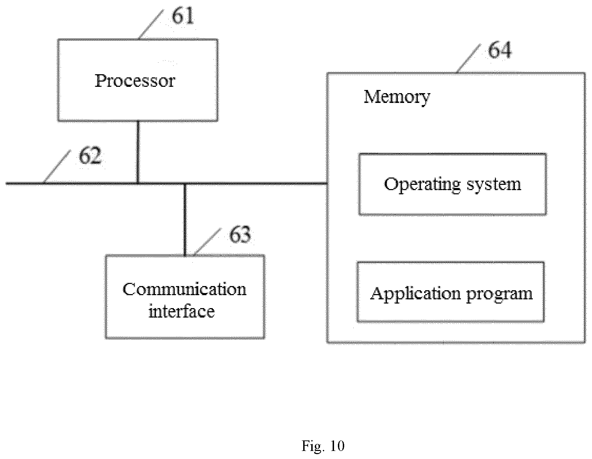

As shown in Fig. 10, Fig. 10 is a schematic structural diagram of an electronic device in accordance with an embodiment of the disclosure. As shown in Fig. 10, the electronic device may include: at least one processor 61, for example, a Central Processing Unit (CPU); at least one communication interface 63; a memory 64; and at least one communication bus 62. The communication bus 62 is configured to achieve connection communication between these assemblies. The communication interface 63 may include a display and a keyboard. Optionally, the communication interface 63 may include a standard wired interface and wireless interface. The memory 64 may be a high-speed Random Access Memory (RAM, which is a volatile RAM), or may be a non-volatile memory, such as at least one disk memory. The memory 64 may optionally be at least one storage apparatus located remotely from the foregoing processor 61. The processor 61 may be combined with the apparatus shown in Fig. 8 and Fig. 9. The memory 64 stores an application program. The processor 61 calls a program code stored in the memory 64, so as to execute any one of the above method steps.

The communication bus 62 may be a Peripheral Component Interconnect (PCI) bus or an Extended Industry Standard Architecture (EISA) bus, or the like. The communication bus 62 may be divided into an address bus, a data bus, a control bus, and the like. For ease of presentation, only one thick line is used in Fig. 10, but it does not mean that there is only one bus or one type of buses.

The memory 64 may include a volatile memory, such as a Random Access Memory (RAM), or may also include a non-volatile memory, such as a flash memory, a Hard Disk Drive (HDD) or a Solid-State Drive (SSD). The memory 64 may further include a combination of the above types of memories.

The processor 61 may be a CPU, a Network Processor (NP) or a combination of the CPU and the NP.

The processor 61 may further include a hardware chip. The hardware chip may be an Application-Specific Integrated Circuit (ASIC), a Programmable Logic Device (PLD), or a combination thereof. The PLD may be a Complex Programmable Logic Device (CPLD), a Field-Programmable Gate Array (FPGA), a generic array logic (GAL), or any combination thereof.

Optionally, the memory 64 is further configured to store program instructions. The processor 61 may call the program instructions, so as to implement the method for predicting a water level of an outlet section shown in Figs. 1 to 3 and Fig. 7.

An embodiment of the disclosure further provides a non-transient computer storage medium. The non-transient computer storage medium stores computer executable instructions. The computer executable instructions can execute the method for predicting a water level of an outlet section in any above method embodiments. The storage medium may be a magnetic disk, an optical disk, an ROM, an RAM, a flash memory, an HDD, an SSD, or the like. The storage medium may further include a combination of memories of the above types.

Although the embodiments of the disclosure are described with reference to the accompanying drawings, those skilled in the art can make various modifications and variations to the disclosure without departing from the scope of the disclosure. Thus, such modifications and variations of the disclosure fall within the scope of the appended claims.

## Claims

1. A method for predicting a water level of an outlet section, comprising:
acquiring an inlet flow rate corresponding to an inlet section within a first time period and an outlet flow rate of the outlet section within a second time period (S11, S21, S31),
**characterized in that** the first time period and the second time period have the same time duration, and the time difference between the first time period and the second time period is the time for water flowing from the inlet section to the outlet section;
and **in that** the method further comprises:
on the basis of a difference relationship between the inlet flow rate and the outlet flow rate, calculating a change value of a reservoir capacity between the inlet section and the outlet section (S12, S22, S32);
on the basis of a relationship among the change value of the reservoir capacity, the inlet flow rate and an initial water level in the second time period corresponding to the outlet section, calculating a first reservoir capacity of continuous sections between the inlet section and the outlet section within the second time period (S13, S23, S33),
wherein the step of, on the basis of a relationship among the change value of the reservoir capacity, the inlet flow rate and an initial water level in the second time period corresponding to the outlet section, calculating a first reservoir capacity of continuous sections between the inlet section and the outlet section within the second time period comprises:
on the basis of a correspondence relationship among the inlet flow rate, the initial water level in the second time period corresponding to the outlet section and the reservoir capacity, determining a second reservoir capacity corresponding to the inlet section at an initial moment of the first time period; and
adding the second reservoir capacity to the change value of the reservoir capacity, so as to obtain the first reservoir capacity;
inputting the first reservoir capacity and the inlet flow rate into a water level calculation model, and outputting a target outlet water level of the outlet section in the second time period, wherein the water level calculation model is generated by fitting on the basis of a relationship among the inlet flow rate, the outlet water level and the reservoir capacity (S14, S24, S34).

2. The method of claim 1, **characterized in that** the step of acquiring an inlet flow rate corresponding to an inlet section within a first time period and an outlet flow rate of an outlet section within a second time period comprises:
acquiring a preset inlet flow rate corresponding to the inlet section and a preset outlet flow rate corresponding to the outlet section in a preset time period;
acquiring a first peak value corresponding to the preset inlet flow rate and a second peak value corresponding to the preset outlet flow rate; and
on the basis of a relationship between the first peak value and the second peak value, acquiring the inlet flow rate and the outlet flow rate.

3. The method of claim 2, **characterized in that** the step of, on the basis of the relationship between the first peak value and the second peak value, acquiring the inlet flow rate and the outlet flow rate comprises:
acquiring a change rule of the inlet flow rate corresponding to the inlet section;
on the basis of the change rule of the inlet flow rate, acquiring the inlet flow rate that meets a preset rule requirement within the first time period;
subtracting the time corresponding to the first peak value from the time corresponding to the second peak value, so as to obtain the time difference between the first time period and the second time period;
adding the time difference to the first time period, so as to obtain the second time period by calculation; and
on the basis of the second time period, acquiring the outlet flow rate.

4. The method of claim 1, **characterized in that** the step of, on the basis of a difference relationship between the inlet flow rate and the outlet flow rate, calculating a change value of a reservoir capacity between the inlet section and the outlet section comprises:
calculating a flow rate difference value between the inlet flow rate and the outlet flow rate; and
within the first time period, performing time integration on the flow rate difference value, so as to obtain the change value of the reservoir capacity between the inlet section and the outlet section.

5. The method of claim 1, **characterized in that** the step of inputting the first reservoir capacity and the inlet flow rate into a water level calculation model, and outputting a target outlet water level of the outlet section in the second time period comprises:
acquiring historical water-flow monitoring data, wherein the historical water-flow monitoring data comprises data of inlet flow rates, outlet water levels and reservoir capacities corresponding to a plurality of rivers and/or reservoirs;
fitting the inlet flow rates, outlet water levels and reservoir capacities in the historical water-flow monitoring data, so as to generate the water level calculation model; and
inputting the first reservoir capacity and the inlet flow rate into the water level calculation model, and outputting the target outlet water level of the outlet section in the second time period.

6. The method of claim 1, **characterized in that**, after the target outlet water level of the outlet section in the second time period is outputted, the method further comprises:
acquiring a real outlet water level of the outlet section within the second time period;
comparing the real outlet water level with the target outlet water level; and
when a difference value between the real outlet water level and the target outlet water level exceeds a preset difference value range, adjusting the time difference between the first time period and the second time period, then acquiring the inlet flow rate and the outlet flow rate again, and re-calculating the target outlet water level.

7. An apparatus for predicting a water level of an outlet section, comprising
a first acquisition module (51), configured to acquire an inlet flow rate corresponding to an inlet section within a first time period and an outlet flow rate of an outlet section within a second time period,
**characterized in that** the first time period and the second time period have the same time duration, and the time difference between the first time period and the second time period is the time for water flowing from the inlet section to the outlet section;
the apparatus further comprising:
a first calculation module (52), configured to, on the basis of a difference relationship between the inlet flow rate and the outlet flow rate, calculate a change value of a reservoir capacity between the inlet section and the outlet section;
a second calculation module (53), configured to, on the basis of a relationship among the change value of the reservoir capacity, the inlet flow rate and an initial water level in the second time period corresponding to the outlet section, calculate a first reservoir capacity of continuous sections between the inlet section and the outlet section within the second time period, wherein the step of, on the basis of a relationship among the change value of the reservoir capacity, the inlet flow rate and an initial water level in the second time period corresponding to the outlet section, calculating a first reservoir capacity of continuous sections between the inlet section and the outlet section within the second time period comprises: on the basis of a correspondence relationship among the inlet flow rate, the initial water level in the second time period corresponding to the outlet section and the reservoir capacity, determining a second reservoir capacity corresponding to the inlet section at an initial moment of the first time period; and adding the second reservoir capacity to the change value of the reservoir capacity, so as to obtain the first reservoir capacity; and
an output module (54), configured to input the first reservoir capacity and the inlet flow rate into a water level calculation model, and output a target outlet water level of the outlet section in the second time period, wherein the water level calculation model is generated by fitting on the basis of a relationship among the inlet flow rate, the outlet water level and the reservoir capacity.

8. An electronic device, comprising a memory (64) and a processor (61), **characterized in that** the memory (64) stores computer instructions; and the processor (61) is configured to execute, by means of executing the computer instructions, the method for predicting a water level of an outlet section of any one of claims 1 to 6.

9. A computer-readable storage medium, storing computer instructions, **characterized in that** the computer instructions are used to cause a computer to execute the method for predicting a water level of an outlet section of any one of claims 1 to 6.

## Patentansprüche

1. Verfahren zum Vorhersagen eines Wasserstands in einem Auslassabschnitt, umfassend:
Erfassen einer einem Einlassabschnitt entsprechenden Einlassdurchflussrate innerhalb einer ersten Zeitspanne und einer Auslassdurchflussrate des Auslassabschnitts innerhalb einer zweiten Zeitspanne (S11, S21, S31),
**dadurch gekennzeichnet, dass** die erste Zeitspanne und die zweite Zeitspanne die gleiche Zeitdauer aufweisen und der Zeitunterschied zwischen der ersten Zeitspanne und der zweiten Zeitspanne die Zeit ist, in der das Wasser von dem Einlassabschnitt zu dem Auslassabschnitt fließt;
und dass das Verfahren ferner Folgendes umfasst:
basierend auf einer Unterschiedsbeziehung zwischen der Einlassdurchflussrate und der Auslassdurchflussrate Berechnen eines Änderungswertes einer Reservoirkapazität zwischen dem Einlassabschnitt und dem Auslassabschnitt (S12, S22, S32);
basierend auf einer Beziehung zwischen dem Änderungswert der Reservoirkapazität, der Einlassdurchflussrate und einem initialen Wasserstand in der zweiten Zeitspanne, die dem Auslassabschnitt entspricht, Berechnen einer ersten Reservoirkapazität von kontinuierlichen Abschnitten zwischen dem Einlassabschnitt und dem Auslassabschnitt innerhalb der zweiten Zeitspanne (S13, S23, S33),
wobei der Schritt des Berechnens einer ersten Reservoirkapazität von kontinuierlichen Abschnitten zwischen dem Einlassabschnitt und dem Auslassabschnitt innerhalb der zweiten Zeitspanne basierend auf einer Beziehung zwischen dem Änderungswert der Reservoirkapazität, der Einlassdurchflussrate und einem initialen Wasserstand in der zweiten Zeitspanne Folgendes umfasst:
basierend auf einer Korrespondenzbeziehung zwischen der Einlassdurchflussrate, dem initialen Wasserstand in der zweiten Zeitspanne, die dem Auslassabschnitt entspricht, und der Reservoirkapazität Bestimmen einer zweiten Reservoirkapazität, die dem Einlassabschnitt zu einem Anfangszeitpunkt der ersten Zeitspanne entspricht; und
Addieren der zweiten Reservoirkapazität zu dem Änderungswert der Reservoirkapazität, um so die erste Reservoirkapazität zu erlangen;
Eingeben der ersten Reservoirkapazität und der Einlassdurchflussrate in ein Wasserstandsberechnungsmodell und Ausgeben eines Zielauslasswasserstands des Auslassabschnitts in der zweiten Zeitspanne, wobei das Wasserstandsberechnungsmodell durch Anpassung basierend auf einer Beziehung zwischen der Einlassdurchflussrate, dem Auslasswasserstand und der Reservoirkapazität (S14, S24, S34) erzeugt wird.

2. Verfahren nach Anspruch 1, **dadurch gekennzeichnet, dass** der Schritt des Erfassens einer einem Einlassabschnitt entsprechenden Einlassdurchflussrate innerhalb einer ersten Zeitspanne und einer Auslassdurchflussrate eines Auslassabschnitts innerhalb einer zweiten Zeitspanne Folgendes umfasst:
Erfassen einer vorbestimmten Einlassdurchflussrate, die dem Einlassabschnitt entspricht, und einer vorbestimmten Auslassdurchflussrate, die dem Auslassabschnitt entspricht, in einer vorbestimmten Zeitspanne;
Erfassen eines ersten Spitzenwertes, der der vorbestimmten Einlassdurchflussrate entspricht, und eines zweiten Spitzenwertes, der der vorbestimmten Auslassdurchflussrate entspricht; und
basierend auf einer Beziehung zwischen dem ersten Spitzenwert und dem zweiten Spitzenwert Erfassen der Einlassdurchflussrate und der Auslassdurchflussrate.

3. Verfahren nach Anspruch 2, **dadurch gekennzeichnet, dass** der Schritt des Erfassens der Einlassdurchflussrate und der Auslassdurchflussrate basierend auf der Beziehung zwischen dem ersten Spitzenwert und dem zweiten Spitzenwert Folgendes umfasst:
Erfassen einer Änderungsregel der Einlassdurchflussrate, die dem Einlassabschnitt entspricht;
basierend auf der Änderungsregel der Einlassdurchflussrate Erfassen der Einlassdurchflussrate, die innerhalb der ersten Zeitspanne eine vorbestimmte Anforderung erfüllt;
Subtrahieren der Zeit, die dem ersten Spitzenwert entspricht, von der Zeit, die dem zweiten Spitzenwert entspricht, um so den Zeitunterschied zwischen der ersten Zeitspanne und der zweiten Zeitspanne zu erlangen;
Addieren des Zeitunterschieds zu der ersten Zeitspanne, um so die zweite Zeitspanne durch Berechnung zu erlangen; und
basierend auf der zweiten Zeitspanne Erfassen der Auslassdurchflussrate.

4. Verfahren nach Anspruch 1, **dadurch gekennzeichnet, dass** der Schritt des Berechnens eines Änderungswertes einer Reservoirkapazität zwischen dem Einlassabschnitt und dem Auslassabschnitt basierend auf einer Unterschiedsbeziehung zwischen der Einlassdurchflussrate und der Auslassdurchflussrate Folgendes umfasst:
Berechnen eines Unterschiedswertes der Durchflussrate zwischen der Einlassdurchflussrate und der Auslassdurchflussrate; und
innerhalb der ersten Zeitspanne Durchführen der zeitlichen Integration des Unterschiedswertes der Durchflussrate, um so den Änderungswert der Reservoirkapazität zwischen dem Einlassabschnitt und dem Auslassabschnitt zu erlangen.

5. Verfahren nach Anspruch 1, **dadurch gekennzeichnet, dass** der Schritt des Eingebens der ersten Reservoirkapazität und der Einlassdurchflussrate in ein Wasserstandsberechnungsmodell und des Ausgebens eines Zielauslasswasserstands des Auslassabschnitts in der zweiten Zeitperiode Folgendes umfasst:
Erfassen historischer Wasserfluss-Überwachungsdaten, wobei die historischen Wasserfluss-Überwachungsdaten Daten von Einlassdurchflussraten, Auslasswasserständen und Reservoirkapazitäten umfassen, die einer Vielzahl von Flüssen und/oder Reservoirs entsprechen;
Einpassen der Einlassdurchflussraten, der Abflusswasserstände und der Reservoirkapazitäten in die historischen Wasserfluss-Überwachungsdaten, um so das Wasserstandsberechnungsmodell zu erzeugen; und
Eingeben der ersten Reservoirkapazität und der Einlassdurchflussrate in das Wasserstandsberechnungsmodell und Ausgeben des Zielauslasswasserstands des Auslassabschnitts in der zweiten Zeitperiode.

6. Verfahren nach Anspruch 1, **dadurch gekennzeichnet, dass** das Verfahren nach der Zielwasserstandausgabe des Auslassabschnitts in der zweiten Zeitspanne ferner Folgendes umfasst:
Erfassen eines tatsächlichen Auslasswasserstands des Auslassabschnitts innerhalb der zweiten Zeitspanne;
Vergleichen des tatsächlichen Auslasswasserstands mit dem Zielauslasswasserstand; und
wenn ein Unterschiedswert zwischen dem realen Auslasswasserstand und dem Zielauslasswasserstand einen vorbestimmten Unterschiedswertbereich überschreitet, Anpassen des Zeitunterschieds zwischen der ersten Zeitspanne und der zweiten Zeitspanne, anschließend erneutes Erfassen der Einlassdurchflussrate und der Auslassdurchflussrate und erneutes Berechnen des Zielauslasswasserstands.

7. Gerät zum Vorhersagen eines Wasserstands in einem Auslassabschnitt, umfassend:
ein erstes Erfassungsmodul (51), das dazu konfiguriert ist, eine einem Einlassabschnitt entsprechende Einlassdurchflussrate innerhalb einer ersten Zeitspanne und eine Auslassdurchflussrate eines Auslassabschnitts innerhalb einer zweiten Zeitspanne zu erfassen,
**dadurch gekennzeichnet, dass** die erste Zeitspanne und die zweite Zeitspanne die gleiche Zeitdauer aufweisen und der Zeitunterschied zwischen der ersten Zeitspanne und der zweiten Zeitspanne die Zeit ist, in der das Wasser von dem Einlassabschnitt zu dem Auslassabschnitt fließt;
wobei das Gerät ferner Folgendes umfasst:
ein erstes Berechnungsmodul (52), das dazu konfiguriert ist, basierend auf einem Unterschiedsverhältnis zwischen der Einlassdurchflussrate und der Auslassdurchflussrate einen Änderungswert einer Reservoirkapazität zwischen dem Einlassabschnitt und dem Auslassabschnitt zu berechnen;
ein zweites Berechnungsmodul (53), das dazu konfiguriert ist, basierend auf einer Beziehung zwischen dem Änderungswert der Reservoirkapazität, der Einlassdurchflussrate und einem initialen Wasserstand in der zweiten Zeitspanne entsprechend dem Auslassabschnitt eine erste Reservoirkapazität von kontinuierlichen Abschnitten zwischen dem Einlassabschnitt und dem Auslassabschnitt innerhalb der zweiten Zeitspanne zu berechnen, wobei der Schritt basierend auf einer Beziehung zwischen dem Änderungswert der Reservoirkapazität, der Einlassdurchflussrate und einem initialen Wasserstand in der zweiten Zeitperiode entsprechend dem Auslassabschnitt eine erste Reservoirkapazität von kontinuierlichen Abschnitten zwischen dem Einlassabschnitt und dem Auslassabschnitt innerhalb der zweiten Zeitperiode zu berechnen, Folgendes umfasst: basierend auf einer Korrespondenzbeziehung zwischen der Einlassdurchflussrate, dem initialen Wasserstand in der zweiten Zeitperiode entsprechend dem Auslassabschnitt und der Reservoirkapazität, Bestimmen einer zweiten Reservoirkapazität entsprechend dem Einlassabschnitt zu einem Anfangszeitpunkt der ersten Zeitperiode; und Hinzufügen der zweiten Reservoirkapazität zu dem Änderungswert der Reservoirkapazität, um die erste Reservoirkapazität zu erlangen; und
ein Ausgabemodul (54), das zum Eingeben der ersten Reservoirkapazität und der Einlassdurchflussrate in ein Wasserstandsberechnungsmodell und Ausgeben eines Zielauslasswasserstands des Auslassabschnitts in der zweiten Zeitspanne konfiguriert ist, wobei das Wasserstandsberechnungsmodell durch Anpassung basierend auf einer Beziehung zwischen der Einlassdurchflussrate, dem Auslasswasserstand und der Reservoirkapazität erzeugt wird.

8. Elektronische Vorrichtung, umfassend einen Speicher (64) und einen Prozessor (61), **dadurch gekennzeichnet, dass** der Speicher (64) Computeranweisungen speichert; und der Prozessor (61) dazu konfiguriert ist, mittels dem Ausführen der Computeranweisungen das Verfahren zum Vorhersagen eines Wasserstands eines Auslassabschnitts nach einem der Ansprüche 1 bis 6 auszuführen.

9. Computerlesbares Speichermedium, das Computeranweisungen speichert, **dadurch gekennzeichnet, dass** die Computeranweisungen dazu verwendet werden, zu veranlassen, dass ein Computer das Verfahren zum Vorhersagen eines Wasserstands in einem Auslassabschnitt nach einem der Ansprüche 1 bis 6 ausführt.

## Revendications

1. Procédé de prédiction d'un niveau d'eau d'une section de sortie, comprenant :
l'acquisition d'un débit d'entrée correspondant à une section d'entrée dans une première période de temps et d'un débit de sortie de la section de sortie dans une seconde période de temps (S11, S21, S31),
**caractérisé en ce que** la première période de temps et la seconde période de temps ont la même durée, et la différence de temps entre la première période de temps et la seconde période de temps est le temps pendant lequel l'eau s'écoule de la section d'entrée à la section de sortie ;
et **en ce que** le procédé comprend également :
sur la base d'une relation de différence entre le débit d'entrée et le débit de sortie, le calcul d'une valeur de changement d'une capacité de réservoir entre la section d'entrée et la section de sortie (S12, S22, S32) ;
sur la base d'une relation entre la valeur de changement de la capacité de réservoir, le débit d'entrée et un niveau d'eau initial dans la seconde période de temps correspondant à la section de sortie, le calcul d'une première capacité de réservoir de sections continues entre la section d'entrée et la section de sortie dans la seconde période de temps (S13, S23, S33),
dans lequel l'étape, sur la base d'une relation entre la valeur de changement de la capacité de réservoir, du débit d'entrée et d'un niveau d'eau initial dans la seconde période de temps correspondant à la section de sortie, le calcul d'une première capacité de réservoir de sections continues entre la section d'entrée et la section de sortie dans la seconde période de temps comprend :
sur la base d'une relation de correspondance entre le débit d'entrée, le niveau d'eau initial dans la seconde période de temps correspondant à la section de sortie et la capacité de réservoir, la détermination d'une seconde capacité de réservoir correspondant à la section d'entrée à un moment initial de la première période de temps ; et
l'ajout de la seconde capacité de réservoir à la valeur de changement de la capacité de réservoir, de manière à obtenir la première capacité de réservoir ;
la saisie de la première capacité de réservoir et du débit d'entrée dans un modèle de calcul de niveau d'eau, et la génération d'un niveau d'eau de sortie cible de la section de sortie dans la seconde période de temps, dans lequel le modèle de calcul de niveau d'eau est généré par ajustement sur la base d'une relation entre le débit d'entrée, le niveau d'eau de sortie et la capacité de réservoir (S14, S24, S34).

2. Procédé selon la revendication 1, **caractérisé en ce que** l'étape d'acquisition d'un débit d'entrée correspondant à une section d'entrée dans une première période de temps et d'un débit de sortie d'une section de sortie dans une seconde période de temps comprend :
l'acquisition d'un débit d'entrée prédéfini correspondant à la section d'entrée et d'un débit de sortie prédéfini correspondant à la section de sortie dans une période de temps prédéfinie ;
l'acquisition d'une première valeur de crête correspondant au débit d'entrée prédéfini et d'une seconde valeur de crête correspondant au débit de sortie prédéfini ; et
sur la base d'une relation entre la première valeur de crête et la seconde valeur de crête, l'acquisition du débit d'entrée et du débit de sortie.

3. Procédé selon la revendication 2, **caractérisé en ce que** l'étape, sur la base de la relation entre la première valeur de crête et la seconde valeur de crête, d'acquisition du débit d'entrée et du débit de sortie comprend :
l'acquisition d'une règle de changement du débit d'entrée correspondant à la section d'entrée ;
sur la base de la règle de changement du débit d'entrée, l'acquisition du débit d'entrée qui satisfait à une exigence de règle prédéfinie dans la première période de temps ;
la soustraction du temps correspondant à la première valeur de crête du temps correspondant à la seconde valeur de crête, de manière à obtenir la différence de temps entre la première période de temps et la seconde période de temps ;
l'ajout de la différence de temps à la première période de temps, de manière à obtenir la seconde période de temps par calcul ; et
sur la base de la seconde période de temps, l'acquisition du débit de sortie.

4. Procédé selon la revendication 1, **caractérisé en ce que** l'étape, sur la base d'une relation de différence entre le débit d'entrée et le débit de sortie, de calcul d'une valeur de changement d'une capacité de réservoir entre la section d'entrée et la section de sortie comprend :
le calcul d'une valeur de différence de débit entre le débit d'entrée et le débit de sortie ; et
dans la première période de temps, la réalisation d'une intégration temporelle sur la valeur de différence de débit, de manière à obtenir la valeur de changement de la capacité de réservoir entre la section d'entrée et la section de sortie.

5. Procédé selon la revendication 1, **caractérisé en ce que** l'étape de saisie de la première capacité de réservoir et du débit d'entrée dans un modèle de calcul de niveau d'eau, et la génération d'un niveau d'eau de sortie cible de la section de sortie dans la seconde période de temps comprend :
l'acquisition de données historiques de surveillance de débit d'eau, dans lequel les données historiques de surveillance de débit d'eau comprennent des données de débits d'entrée, de niveaux d'eau de sortie et de capacités de réservoir correspondant à une pluralité de rivières et/ou de réservoirs ;
l'ajustement des débits d'entrée, des niveaux d'eau de sortie et des capacités de réservoir dans les données historiques de surveillance de débit d'eau, de manière à générer le modèle de calcul de niveau d'eau ; et
la saisie de la première capacité de réservoir et du débit d'entrée dans le modèle de calcul de niveau d'eau, et la génération du niveau d'eau de sortie cible de la section de sortie dans la seconde période de temps.

6. Procédé selon la revendication 1, **caractérisé en ce que**, après que le niveau d'eau de sortie cible de la section de sortie dans la seconde période de temps est généré, le procédé comprend également :
l'acquisition d'un niveau d'eau de sortie réel de la section de sortie dans la seconde période de temps ;
la comparaison du niveau d'eau de sortie réel avec le niveau d'eau de sortie cible ; et
lorsqu'une valeur de différence entre le niveau d'eau de sortie réel et le niveau d'eau de sortie cible dépasse une plage de valeurs de différence prédéfinie, l'ajustement de la différence de temps entre la première période de temps et la seconde période de temps, puis l'acquisition à nouveau du débit d'entrée et du débit de sortie, et le recalcul du niveau d'eau de sortie cible.

7. Appareil de prévision d'un niveau d'eau d'une section de sortie, comprenant :
un premier module d'acquisition (51), configuré pour acquérir un débit d'entrée correspondant à une section d'entrée dans une première période de temps et un débit de sortie d'une section de sortie dans une seconde période de temps,
**caractérisé en ce que** la première période de temps et la seconde période de temps ont la même durée, et la différence de temps entre la première période de temps et la seconde période de temps est le temps pendant lequel l'eau s'écoule de la section d'entrée à la section de sortie ;
l'appareil comprenant également :
un premier module de calcul (52), configuré pour, sur la base d'une relation de différence entre le débit d'entrée et le débit de sortie, calculer une valeur de changement d'une capacité de réservoir entre la section d'entrée et la section de sortie ;
un second module de calcul (53), configuré pour, sur la base d'une relation entre la valeur de changement de la capacité de réservoir, le débit d'entrée et un niveau d'eau initial dans la seconde période de temps correspondant à la section de sortie, calculer une première capacité de réservoir de sections continues entre la section d'entrée et la section de sortie dans la seconde période de temps, dans lequel l'étape, sur la base d'une relation entre la valeur de changement de la capacité de réservoir, du débit d'entrée et d'un niveau d'eau initial dans la seconde période de temps correspondant à la section de sortie, de calcul d'une première capacité de réservoir de sections continues entre la section d'entrée et la section de sortie dans la seconde période de temps comprend : sur la base d'une relation de correspondance entre le débit d'entrée, le niveau d'eau initial dans la seconde période de temps correspondant à la section de sortie et la capacité de réservoir, la détermination d'une seconde capacité de réservoir correspondant à la section d'entrée à un moment initial de la première période de temps ; et l'ajout de la seconde capacité de réservoir à la valeur de changement de la capacité de réservoir, de manière à obtenir la première capacité de réservoir ; et
un module de saisie (54), configuré pour saisir la première capacité de réservoir et le débit d'entrée dans un modèle de calcul de niveau d'eau, et générer un niveau d'eau de sortie cible de la section de sortie dans la seconde période de temps, dans lequel le modèle de calcul de niveau d'eau est généré par ajustement sur la base d'une relation entre le débit d'entrée, le niveau d'eau de sortie et la capacité de réservoir.

8. Dispositif électronique, comprenant une mémoire (64) et un processeur (61), **caractérisé en ce que** la mémoire (64) stocke des instructions informatiques ; et le processeur (61) est configuré pour exécuter, au moyen de l'exécution des instructions informatiques, le procédé de prédiction d'un niveau d'eau d'une section de sortie selon l'une quelconque des revendications 1 à 6.

9. Support de stockage lisible par ordinateur, stockant des instructions informatiques, **caractérisé en ce que** les instructions informatiques sont utilisées pour amener un ordinateur à exécuter le procédé de prédiction d'un niveau d'eau d'une section de sortie selon l'une quelconque des revendications 1 à 6.
